# EUROPEAN PATENT APPLICATION

(11) **EP 4 181 304 A1**
(43) Date of publication of application: **17.05.2023**
(21) Application number: 22206366.1
(22) Date of filing: 09.11.2022
(51) Int. Cl.: H01M 50/414, H01M 50/434, H01M 50/446, H01M 50/451, H01M 50/457

(54) **SEPARATOR AND NONAQUEOUS ELECTROLYTE SECONDARY BATTERY INCLUDING THE SAME**

(30) Priority: 12.11.2021 JP 2021184690
(71) Applicant: Prime Planet Energy & Solutions, Inc., Chuo-ku Tokyo 103-0022 (JP)
(72) Inventor: MIYAZAKI, Shinya, Tokyo, 103-0022 (JP); OBAYASHI, Atsushi, Tokyo, 103-0022 (JP); KUSADA, Hideo, Tokyo, 103-0022 (JP); NOWATARI, Yuko, Tokyo, 103-0022 (JP)
(74) Representative: Kuhnen & Wacker Patent- und Rechtsanwaltsbüro PartG mbB

(57) **Abstract**

Provided is a separator showing high antistatic property, high degassing property in winding, and high impregnating ability of a nonaqueous electrolyte after forming an electrode body. The separator disclosed here includes a base material layer of a porous resin, and a ceramic layer containing 85 mass% or more of first inorganic particles and disposed on at least one surface of the base material layer. Principal surfaces of the separator have long sides. The separator further includes an adhesive layer having portions arranged at a predetermined pitch to form a stripe pattern on at least one of the principal surfaces. The adhesive layer contains an adhesive resin and second inorganic particles. A content of the second inorganic particles in the adhesive layer is 3 mass% or more and 65 mass% or less. An angle formed by the adhesive layer and the long side of the at least one principal surface of the separator is 20° or more and 70° or less.

## Description

### TECHNICAL FIELD

The present disclosure relates to a separator. The present disclosure also relates to a nonaqueous electrolyte secondary battery including the separator.

### BACKGROUND

Nonaqueous electrolyte secondary batteries such as lithium ion secondary batteries have been suitably used in portable power supplies of, for example, personal computers and portable terminals, vehicle drive power sources of, for example, battery electric vehicles (BEVs), hybrid electric vehicles (HEVs), and plug-in hybrid electric vehicles (PHEVs), and other devices.

A nonaqueous electrolyte secondary battery uses a separator for insulating a positive electrode and a negative electrode from each other. A known example of such a separator includes a stack of a porous resin base material and a ceramic layer containing inorganic particles. In addition, in a known technique, an adhesive resin is disposed on a surface of a separator in order to enhance adhesion between an electrode and the separator (see, for example, Patent Document 1).

### CITATION LIST

### PATENT REFERENCE

Patent Document 1: JP5572101B2

### SUMMARY OF THE INVENTION

By an intensive study of inventors of the present disclosure, it has been found that in the case of disposing an adhesive resin on a surface of a separator, the adhesive resin is electrically charged, resulting in problems such as sticking of separators, a failure in removing a winding core, and a defect caused by discharge, in manufacturing separators. It has been also found that gas (air) release is inhibited in winding a separator, resulting in problems such as difficulty in smooth winding and a decrease in handleability of a winding body. It has been also found that in bonding a separator and an electrode to form an electrode body, porosity of the separator decreases to reduce impregnating ability of the nonaqueous electrolyte, resulting in the possibility of harmful effect on battery resistance characteristics.

It is therefore an object of the present disclosure to provide a separator showing high antistatic property, high degassing property in winding, and high impregnating ability of a nonaqueous electrolyte after forming an electrode body.

A separator disclosed here includes: a base material layer of a porous resin; and a ceramic layer containing 85 mass% or more of first inorganic particles and disposed on at least one surface of the base material layer. Principal surfaces of the separator have long sides. The separator further comprises an adhesive layer having portions arranged at a predetermined pitch to form a stripe pattern on at least one of the principal surfaces. The adhesive layer includes an adhesive resin and second inorganic particles. A content of the second inorganic particles in the adhesive layer is 3 mass% or more and 65 mass% or less. An angle formed by the adhesive layer and the long side of the at least one principal surface of the separator is 20° or more and 70° or less.

This configuration can provide the separator with high antistatic property, high degassing property in winding, and high impregnability of a nonaqueous electrolyte after forming an electrode body.

In a desired aspect of the separator disclosed here, the angle formed by the adhesive layer and the long side of the at least one principal surface of the separator is 45° or more and 60° or less. This configuration can provide the separator with higher impregnability of the nonaqueous electrolyte.

In a desired aspect of the separator disclosed here, the adhesive resin is polyvinylidene fluoride. With this configuration, the separator has especially high adhesion to the electrodes and can prevent harmful effect of the adhesive resin on battery characteristics.

In a desired aspect of the separator disclosed here, the second inorganic particles contained in the adhesive layer are particles of alumina, boehmite, magnesia, or barium sulfate. This configuration can prevent harmful effect of the second inorganic particles on battery characteristics, and these particles are reasonable and cost-effective.

In a desired aspect of the separator disclosed here, the adhesive layer has a width of 0.5 mm or more and 4 mm or less, and a coverage of the at least one principal surface of the separator with the adhesive layer is 50% or more and 90% or less. This configuration can provide the separator with especially high impregnating ability of the nonaqueous electrolyte.

In another aspect, a nonaqueous electrolyte secondary battery disclosed here includes: an electrode body including a positive electrode, a negative electrode, and a separator insulating the positive electrode and the negative electrode from each other; and a nonaqueous electrolyte. This separator is the separator described above. This configuration can provide the nonaqueous electrolyte secondary battery with high production efficiency.

### BRIEF DESCRIPTION OF THE DRAWINGS

FIG. 1 is a schematic view (top view) seen in a direction perpendicular to a principal surface of a separator according to one embodiment of the present disclosure.
FIG. 2 is a partial cross-sectional view schematically illustrating a separator according to one embodiment of the present disclosure.
FIG. 3 is an enlarged partial view of a vicinity of a long side in FIG. 1.
FIG. 4 is a cross-sectional view schematically illustrating an internal configuration of a lithium ion secondary battery including a separator according to one embodiment of the present disclosure.
FIG. 5 is a schematic disassembled view illustrating a configuration of a wound electrode body of the lithium ion secondary battery illustrated in FIG. 4.

### DETAILED DESCRIPTION OF THE PREFERRED EMBODIMENTS

An embodiment of the present disclosure will be described hereinafter with reference to the drawings. Matters not mentioned in the specification but required for carrying out the present disclosure can be understood as matters of design variation of a person skilled in the art based on the related art in the field. The present disclosure can be carried out on the basis of the contents disclosed in the specification and common general knowledge in the field. In the drawings, members and parts having the same functions are denoted by the same reference characters for description. Dimensional relationships (e.g., length, width, and thickness) in the drawings do not reflect actual dimensional relationships.

A "secondary battery" herein refers to a power storage device capable of being repeatedly charged and discharged, and includes a so-called storage battery and a power storage element such as an electric double layer capacitor. A "lithium ion secondary battery" herein refers to a secondary battery that uses lithium ions as charge carriers and performs charge and discharge by movement of charges accompanying lithium ions between positive and negative electrodes.

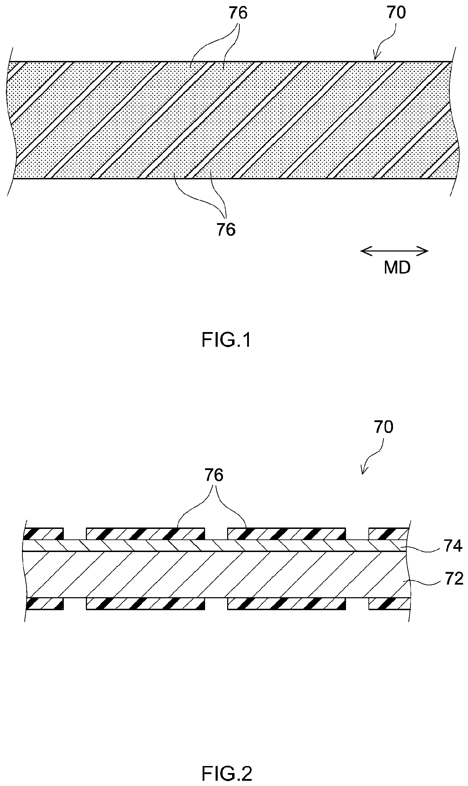

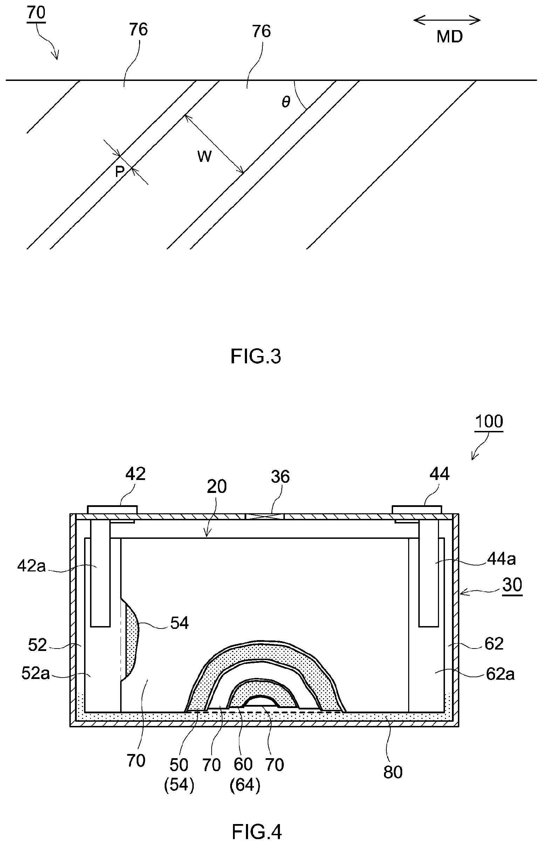

A separator according to an embodiment as an example of a separator disclosed here is illustrated in FIGS. 1 through 3. FIG. 1 is a schematic view (top view) seen in a direction perpendicular to a principal surface of a separator according to this embodiment. FIG. 2 is a partial cross-sectional view of the separator according to this embodiment. FIG. 3 is an enlarged partial view of a vicinity of a long side in FIG. 1.

As illustrated in FIG. 2, a separator 70 according to this embodiment includes a porous resin base material layer 72 and a ceramic layer 74 containing first inorganic particles. In FIG. 1, a direction MD indicated by an arrow is a longitudinal direction of the separator 70, and as illustrated in FIG. 1, principal surfaces of the separator 70 have long sides parallel to the direction MD. In the illustrated example, the separator 70 has an elongated shape so as to ease continuous fabrication. The separator 70 may not have an elongated shape as long as the principal surfaces thereof have long sides.

A porous resin constituting a base material layer 72 may be a known porous resin for use in a separator of a nonaqueous electrolyte secondary battery. Examples of the resin include polyolefin, polyester, cellulose, and polyamide. Among these materials, polyolefin is desirable because of the ability of providing a so-called shutdown function to the separator 70. Examples of desirable polyolefin include polyethylene (PE) and polypropylene (PP).

The base material layer 72 may have a single-layer structure or a laminated structure of two or more layers (e.g., three-layer structure in which PP layers are stacked on both surfaces of a PE layer).

The thickness of the base material layer 72 is not specifically limited as long as the base material layer 72 insulates a positive electrode and a negative electrode from each other, and is, for example, 8 µm or more and 40 µm or less, desirably 10 µm or more and 25 µm or less, and more desirably 10 µm or more and 14 µm or less.

The porosity of the base material layer 72 is not specifically limited, and may be substantially equal to the porosity of a known base material layer of a separator of a nonaqueous electrolyte secondary battery. The porosity of the base material layer 72 is, for example, 20% or more and 70% or less, desirably 30% or more 60% or less, and more desirably 40% or more 50% or less. It should be noted that the porosity of the base material layer 72 can be measured by mercury intrusion porosimetry.

The air permeability of the base material layer 72 is not specifically limited, and may be substantially equal to the air permeability of a known base material layer of a separator of a nonaqueous electrolyte secondary battery. The air permeability of the base material layer 72 is, for example, 50 sec./100mL or more and 600 sec./100mL or less, and desirably 150 sec./100mL or more and 300 sec./100mL or less, in terms of a Gurley number. It should be noted that the Gurley number of the base material layer 72 can be measured by a method defined in JIS P8117 (2009).

The type of the first inorganic particles contained in the ceramic layer 74 is not specifically limited. Examples of the first inorganic particles include: particles of oxide-based ceramic such as alumina (Al₂O₃), silica (SiO₂), titania (TiO₂), zirconia (ZrO₂), magnesia (MgO), ceria (CeO₂), and zinc oxide (ZnO); particles of nitride-based ceramic such as silicon nitride, titanium nitride, and boron nitride; particles of metal hydroxides such as calcium hydroxide, magnesium hydroxide, and aluminium hydroxide; particles of clay minerals such as mica, talc, boehmite, zeolite, apatite, and kaolin; particles of sulfate such as barium sulfate and strontium sulfate; and glass fibers. Among these materials, particles of alumina and boehmite are desirably used. Alumina and boehmite have high melting points and high heat resistance. Alumina and boehmite have relatively high Mohs' hardnesses, high mechanical strength, and high durability. In addition, since alumina and boehmite are relatively reasonable in cost, material costs can be reduced.

The shape of the first inorganic particles is not specifically limited, and may be spherical or non-spherical. The average particle size (D50) of the inorganic particles is not specifically limited, and is, for example, 0.1 µm or more and 5 µm or less, desirably 0.3 µm or more and 3 µm or less, and more desirably 0.5 µm or more and 1.5 µm or less. It should be noted that the average particle size (D50) herein refers to a median particle size (D50), and means a particle size corresponding to a cumulative frequency of 50 vol% from the small-size particle side in volume-based particle size distribution based on a laser diffraction and scattering method. Thus, the average particle size (D50) can be obtained by using, for example, a known particle size distribution analyzer of a laser diffraction and scattering type.

The ceramic layer 74 may have components other than the first inorganic particles, and examples of these components include a binder and a thickener. Examples of the binder include: fluorine-based polymer such as polytetrafluoroethylene (PTFE) and polyvinylidene fluoride (PVDF); acrylic-based binders; rubber-based binders such as styrene butadiene rubber (SBR); and polyolefin-based binders. Examples of the thickener include a carboxymethyl cellulose (CMC) and methyl cellulose (MC).

The content of the first inorganic particles in the ceramic layer 74 is 85 mass% or more. Since the content of the first inorganic particles is 85 mass% or more, the ceramic layer 74 has high strength and high heat resistance. The content of the first inorganic particles in the ceramic layer 74 is desirably 90 mass% or more and 97 mass% or less, and more desirably 92 mass% or more and 97 mass% or less.

The content of the binder in the ceramic layer 74 is 15 mass% or less, desirably 3 mass% or more and 10 mass% or less, and more desirably 3 mass% and 8 mass% or less.

The thickness of the ceramic layer 74 is not specifically limited, and is, for example, 0.3 µm or more and 6.0 µm or less, desirably 0.5 µm or more and 4.5 µm or less, and more desirably 1.0 µm or more and 2.0 µm or less.

The porosity of the ceramic layer 74 is not specifically limited, and may be substantially equal to that of a known ceramic layer 74 of a separator of a nonaqueous electrolyte secondary battery. The porosity of the ceramic layer 74 is, for example, 30% or more and 90% or less, desirably 40% or more and 80% or less, and more desirably 50% or more and 70% or less. It should be noted that the porosity of the ceramic layer 74 can be measured by a mercury intrusion porosimetry.

It should be noted that in the illustrated example, the separator 70 includes the ceramic layer 74 only on one principal surface of the base material layer 72. Alternatively, the separator 70 may include the ceramic layer 74 on both principal surfaces of the base material layer 72.

The separator 70 according to this embodiment further includes an adhesive layer 76. Thus, the separator 70 has a structure in which the adhesive layer 76 is provided to a laminate of the base material layer 72 and the ceramic layer 74.

In the illustrated example, the separator 70 includes a principal surface at the side of the base material layer 72 and a principal surface at the side of the ceramic layer 74. The adhesive layer 76 is provided on at least one of the principal surfaces of the separator 70. In the example illustrated in FIG. 2, the separator 70 includes the adhesive layer 76 on each of the principal surfaces (i.e., the principal surface at the side of the base material layer 72 and the principal surface at the side of the ceramic layer 74). Alternatively, the separator 70 may include the adhesive layer 76 only on the principal surface at the side of the base material layer 72 or may include the adhesive layer 76 only on the principal surface at the side of the ceramic layer 74.

In this embodiment, the adhesive layer 76 has portions arranged at a predetermined pitch to form a stripe pattern. Thus, as illustrated in the drawing, each portion of the adhesive layer 76 is formed as a projection extending in one direction. Accordingly, in the principal surface of the separator 70 provided with the adhesive layer 76, regions including the adhesive layer 76 and regions including no adhesive layer 76 are alternately formed. To the regions including no adhesive layer 76, a small amount of the adhesive component may adhere (e.g., a coverage of the regions including no adhesive layer 76 with constituents of adhesive layer 76 may be 5% or less, and desirably 1% or less) because of technical limitations in manufacturing, for example.

In this embodiment, the stripe pattern of the adhesive layer 76 is an oblique stripe pattern. An angle formed by the adhesive layer 76 and the long side of the principal surface of the separator 70 (i.e., an angle θ shown in FIG. 3) is 20° or more and 70° or less. Thus, the adhesive layer 76 tilts with respect to the longitudinal direction of the separator 70 (i.e., the arrow direction MD in FIG. 1) in the range from 20° and 70°, both inclusive. The angle formed by the adhesive layer 76 and the long side of the principal surface of the separator 70 can be an acute angle or an obtuse angle, and the acute angle is employed herein.

The adhesive layer 76 having such an oblique stripe pattern enables the separator 70 to have high adhesion to electrodes and high impregnating ability of the nonaqueous electrolyte. Specifically, with the stripe pattern of the adhesive layer 76, a channel of the nonaqueous electrolyte is formed between adjacent portions of the adhesive layer 76 so that the nonaqueous electrolyte can easily permeate the inside of the separator 70 in regions between adjacent portions of the adhesive layer 76 (e.g., regions without the adhesive layer 76 on the principal surface of the separator 70). At this time, since the stripe pattern of the adhesive layer 76 appropriately tilts, the nonaqueous electrolyte can more easily permeate the separator.

Thus, if the angle θ formed by the adhesive layer 76 and the long side of the principal surface of the separator 70 is not in the range from 20° and 70°, both inclusive, impregnating ability of the nonaqueous electrolyte is insufficient. From the viewpoint of higher impregnating ability of the nonaqueous electrolyte, the angle θ is desirably 30° or more and 65° or less, and more desirably 45° or more 60° or less.

In the case of using the separator 70 with such high impregnating ability of the nonaqueous electrolyte for a nonaqueous electrolyte secondary battery, battery resistance can be reduced.

In addition, in the case of using the separator 70 with such high impregnating ability of the nonaqueous electrolyte for a nonaqueous electrolyte secondary battery, the time necessary for impregnating the electrode body including the separator 70 with the nonaqueous electrolyte can be shortened in manufacturing, and thus, production efficiency of the nonaqueous electrolyte secondary battery can be enhanced.

Furthermore, in repeatedly charging and discharging the nonaqueous electrolyte secondary battery, expansion of an active material used for the electrode causes the nonaqueous electrolyte to be discharged from the electrode body, but the discharged nonaqueous electrolyte easily returns to the electrode body. Thus, it is possible to suppress resistance increase of the nonaqueous electrolyte secondary battery in repetitive charging and discharging.

Here, in the base material layer 72 and the ceramic layer 74 of the separator 70, permeability of the nonaqueous electrolyte is higher in the ceramic layer 74 than in the base material layer 72. Thus, in the case of disposing the adhesive layer 76 on at least the principal surface of the base material layer 72 having lower permeability of the nonaqueous electrolyte, increase of impregnating ability of the nonaqueous electrolyte by the adhesive layer 76 can be further promoted.

In addition, since the adhesive layer 76 is continuous in one direction, adhesion to the electrode is higher than that in a conventional technique in which an adhesive layer is formed in a dot pattern.

In the principal surface of the separator 70 on which the adhesive layer 76 is formed, the coverage of this principal surface of the separator 70 with the adhesive layer 76 (i.e., an area coated with the adhesive layer 76 on the principal surface of the separator 70) is not specifically limited. From the viewpoint of higher adhesion, the coverage is desirably 50% or more and more desirably 60% or more. On the other hand, from the viewpoints of especially high impregnating ability of the nonaqueous electrolyte and especially low battery resistance, the coverage is desirably 90% or less and more desirably 80% or less.

The width of the adhesive layer 76 (i.e., a dimension perpendicular to the extension direction of the adhesive layer 76: a width W in FIG. 3) is not specifically limited, and is, for example, 0.5 mm or more and 4 mm or less, and desirably 3 mm or more and 4 mm or less.

The distance between adjacent portions of the adhesive layer 76 (i.e., the width of a gap between adjacent portions of the adhesive layer 76; a pitch P in FIG. 3) is not specifically limited, and is, for example, 0.5 mm or more and 4 mm or less, and desirably 0.5 mm or more and 2 mm or less.

The thickness of the adhesive layer 76 (i.e., a dimension orthogonal to the principal surface of the separator 70) is not specifically limited, and is, for example, 0.5 µm or more and 4.5 µm or less, desirably 0.5 µm or more and 2.5 µm or less, and more desirably 1.0 µm or more and 2.0 µm or less.

From the viewpoint of further enhancing impregnating ability of the nonaqueous electrolyte by disposing regions where the nonaqueous electrolyte easily permeates at predetermined intervals, the width of the adhesive layer 76 is desirably 0.5 mm or more and 4 mm or less, and the coverage of the principal surface of the separator with the adhesive layer 76 is desirably 50% or more and 90% or less.

In the example illustrated in FIG. 2, the adhesive layer 76 has a rectangular cross-sectional shape. Since the adhesive layer 76 has the rectangular cross-sectional shape, a large adhesion area to the electrode can be easily obtained. However, the cross-sectional shape of the adhesive layer 76 is not limited to this example as long as the electrode and the separator 70 can be bonded together.

The adhesive layer 76 contains an adhesive resin and second inorganic particles. Since the adhesive layer 76 contains the second inorganic particles, the adhesive layer 76 is less likely to be electrically charged. In addition, at this time, since the adhesive layer 76 is provided in a stripe pattern, antistatic property of the adhesive layer 76 becomes especially high. Thus, in manufacturing separators, it is possible to solve problems such as unintentional sticking of separators, a failure in removing a winding core, and a defect due to discharge, caused by electrification of the adhesive layer 76.

In addition, since the adhesive layer 76 contains the second inorganic particles and has the stripe pattern, adhesiveness of the adhesive layer 76 is optimized, and unevenness is formed on the surface of the adhesive layer 76 by the second inorganic particles. Accordingly, gas (air) is easily released in winding the separator 70. That is, the separator 70 is allowed thereby to have high degassing property. As a result, the separator 70 can be easily wound, and the wound separator 70 has high handleability.

The type of the adhesive resin is not specifically limited as long as the electrode and the separator 70 can be bonded together. Examples of the adhesive resin include polyvinylidene fluoride (PVDF); diene-based rubber such as styrene-butadiene rubber (SBR), acrylonitrile-butadiene rubber (NBR), and acrylonitrile-butadiene-styrene rubber (NSBR); (metha)acrylic resins such as polyacrylic acid, a butylacrylate-ethylhexyl acrylate copolymer, and a methyl methacrylate-ethylhexyl acrylate copolymer; cellulose derivatives such as carboxymethyl cellulose and hydroxyalkyl cellulose; polyacrylonitrile; polyvinyl chloride; polyvinyl alcohol; polyvinyl butyral; and polyvinylpyrrolidone. The adhesive layer 76 may contain one of these adhesive resins alone, or may contain two or more of the adhesive resins. Among these adhesive resins, polyvinylidene fluoride is desirable from the viewpoint of high adhesion between the separator and the electrode and prevention of harmful effect on battery characteristics.

The content of the adhesive resin in the adhesive layer 76 is 35 mass% or more, desirably 40 mass% or more, more desirably 50 mass% or more, and much more desirably 60 mass% or more. On the other hand, the content of the adhesive resin is 97 mass% or less, desirably 95 mass% or less, more desirably 90 mass% or less, and much more desirably 80 mass% or less.

As the second inorganic particles, the same particles as those exemplified as the first inorganic particles can be used. Desired examples of the second inorganic particles include particles of alumina, boehmite, magnesia, and barium sulfate. These particles can prevent harmful effect of the second inorganic particles on battery characteristics, and these particles are reasonable and cost-effective. The second inorganic particles are more desirably particles of alumina and boehmite. The first inorganic particles contained in the ceramic layer 74 and the second inorganic particles contained in the adhesive layer 76 may be the same or may be different.

The average particle size (D50) of the second inorganic particles is not specifically limited, and is, for example, 0.1 µm or more and 5 µm or less, desirably 0.3 µm or more and 3 µm or less, and more desirably 0.5 µm or more and 1.5 µm or less.

From the viewpoint of obtaining sufficient advantages of the second inorganic particles, the content of the second inorganic particles in the adhesive layer 76 is 3 mass% or more, desirably 5 mass% or more, more desirably 10 mass% or more, and much more desirably 20 mass% or more. On the other hand, the adhesive layer 76 needs to have adhesion enough to function as an adhesive layer, and thus, the content of the second inorganic particles in the adhesive layer 76 is 65 mass% or less, desirably 60 mass% or less, more desirably 50 mass% or less, and much more desirably 40 mass% or less.

Since the adhesive layer 76 has adhesion enough to function as an adhesive layer, the electrode and the separator are bonded together with sufficient strength, and thereby the electrode can be firmly fixed to the separator. Accordingly, an interplate distance (i.e., distance between the positive electrode and the negative electrode) can be kept uniform. As a result, in the nonaqueous electrolyte secondary battery, precipitation of metal lithium and accumulation of a generated gas due to a nonuniform interplate distance can be suppressed. In addition, since the electrode and the separator are bonded together with sufficient strength, a misalignment in stacking the separator and the electrode is less likely to occur in fabrication of the electrode body so that the manufacturing speed of the electrode body, the yield of the electrode body, and insertability to a battery case can be enhanced. From the viewpoint of maintaining a more uniform interplate distance, the adhesive layer 76 is desirably disposed on both principal surfaces of the separator 70.

The adhesive layer 76 may contain only the adhesive resin and the second inorganic particles, and may further contain components other than the adhesive resin and the second inorganic particles (i.e., other components). Examples of the other components include additives such as an antifoaming agent, a surfactant, a humectant, and a pH adjuster.

In the illustrated example, the separator 70 includes only three types of layers: the base material layer 72, the ceramic layer 74, and the adhesive layer 76. Alternatively, the separator 70 may further include layers other than the base material layer 72, the ceramic layer 74, and the adhesive layer 76 as long as advantages of the present disclosure are not significantly impaired.

The separator 70 can be fabricated by a known method. For example, a porous resin base material to be a base material layer 72 is prepared. The porous resin base material is desirably an elongated base material. A slurry for forming a ceramic layer, containing first inorganic particles is applied to the porous resin base material and dried, thereby obtaining a laminate including a ceramic layer 74.

Next, a coating solution containing an adhesive resin, second inorganic particles, and a solvent is prepared, and applied to the laminate. At this time, the coating solution is applied to the laminate at a predetermined pitch to form a stripe pattern. In addition, the coating solution is applied with a tilt in the range from 20° to 70° with respect to the long side of the principal surface of the laminate, that is, with respect to the longitudinal direction. Such application can be performed by using, for example, a roll coater including a gravure roll having a groove oblique to the rotation direction, for example.

The applied coating solution is dried to form an adhesive layer 76, thereby obtaining a separator 70.

The separator 70 according to this embodiment can be used for a nonaqueous electrolyte secondary battery in accordance with a known method. Thus, the separator 70 according to this embodiment is typically a separator of a nonaqueous electrolyte secondary battery, and desirably a separator of a lithium ion secondary battery.

From another viewpoint, a nonaqueous electrolyte secondary battery disclosed here includes an electrode body including a positive electrode, a negative electrode, and a separator insulating the positive and negative electrodes from each other, and also includes a nonaqueous electrolyte. This separator is the separator described above.

As a configuration example of the nonaqueous electrolyte secondary battery disclosed here, a lithium ion secondary battery including the separator described above will be briefly described hereinafter with reference to the drawings. The following lithium ion secondary battery is an example, and is not intended to limit the nonaqueous electrolyte secondary battery disclosed here.

A lithium ion secondary battery 100 illustrated in FIG. 4 is a sealed battery in which a flat wound electrode body 20 and a nonaqueous electrolyte 80 are housed in a flat square battery case (i.e., an outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The battery case 30 has an injection port (not shown) for injecting the nonaqueous electrolyte 80. The positive electrode terminal 42 is electrically connected to a positive electrode current collector plate 42a. The negative electrode terminal 44 is electrically connected to a negative electrode current collector plate 44a. A material for the battery case 30 is, for example, a metal material that is lightweight and has high thermal conductivity, such as aluminium.

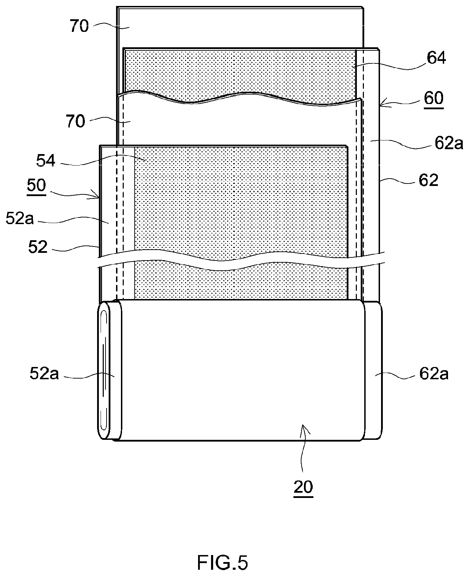

As illustrated in FIGS. 4 and 5, in the wound electrode body 20, a positive electrode sheet 50 and a negative electrode sheet 60 are stacked with two elongated separator sheets 70 interposed therebetween and wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) surface of a long negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

As the positive electrode current collector 52 constituting the positive electrode sheet 50, a known positive electrode current collector for use in a lithium ion secondary battery may be used, and examples of the positive electrode current collector include sheets or foil of highly conductive metals (e.g., aluminium, nickel, titanium, and stainless steel). The positive electrode current collector 52 is desirably aluminium foil.

Dimensions of the positive electrode current collector 52 are not specifically limited, and may be appropriately determined depending on battery design. In the case of using aluminium foil as the positive electrode current collector 52, the thickness thereof is not specifically limited, and is, for example, 5 µm or more and 35 µm or less, and desirably 7 µm or more and 20 µm or less.

The positive electrode active material layer 54 includes a positive electrode active material. As the positive electrode active material, a known positive electrode active material for use in a lithium ion secondary battery may be used. Specifically, for example, lithium composite oxide or a lithium transition metal phosphoric acid compound, for example, may be used as a positive electrode active material. The crystal structure of the positive electrode active material is not specifically limited, and may be, for example, a layered structure, a spinel structure, or an olivine structure.

The lithium composite oxide is desirably a lithium transition metal composite oxide including at least one of Ni, Co, or Mn as a transition metal element, and specific examples of the lithium composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminium composite oxide, and a lithium iron nickel manganese composite oxide. These positive electrode active materials may be used alone or may be used in combination of two or more of them. The positive electrode active material is desirably a lithium nickel cobalt manganese composite oxide.

The "lithium nickel cobalt manganese composite oxide" herein includes not only oxides including Li, Ni, Co, Mn, and O as constituent elements, but also an oxide further including one or more additive elements besides them. Examples of the additive elements include transition metal elements and typical metal elements such as Mg, Ca, Al, Ti, V, Cr, Y, Zr, Nb, Mo, Hf, Ta, W, Na, Fe, Zn, and Sn. The additive elements may be a metalloid element such as B, C, Si, or P, and a nonmetal element such as S, F, Cl, Br, or I. This also applies, in the same manner, to, for example, the lithium nickel composite oxide, the lithium cobalt composite oxide, the lithium manganese composite oxide, the lithium nickel manganese composite oxide, the lithium nickel cobalt aluminium composite oxide, and the lithium iron nickel manganese composite oxide.

The average particle size (median particle size: D50) of the positive electrode active material is not specifically limited, and is, for example, 0.05 µm or more and 25 µm or less, desirably 1 µm or more and 20 µm or less, and more desirably 3 µm or more and 15 µm or less.

The positive electrode active material layer 54 may include components other than the positive electrode active material, such as trilithium phosphate, a conductive agent, and a binder. Desired examples of the conductive agent include carbon black such as acetylene black (AB) and other carbon materials (e.g., graphite). Examples of the binder include polyvinylidene fluoride (PVDF).

The content of the positive electrode active material in the positive electrode active material layer 54 (i.e., content of the positive electrode active material in the total mass of the positive electrode active material layer 54) is not specifically limited, and is desirably 70 mass% or more, more desirably 80 mass% or more and 97 mass% or less, and much more desirably 85 mass% or more and 96 mass% or less. The content of trilithium phosphate in the positive electrode active material layer 54 is not specifically limited, and is desirably 1 mass% or more and 15 mass% or less, and more desirably 2 mass% or more and 12 mass% or less. The content of the conductive agent in the positive electrode active material layer 54 is not specifically limited, and is desirably 1 mass% or more and 15 mass% or less, and more desirably 3 mass% or more and 13 mass% or less. The content of the binder in the positive electrode active material layer 54 is not specifically limited, and is desirably 1 mass% or more and 15 mass% or less, and more desirably 1.5 mass% or more and 10 mass% or less.

The thickness of the positive electrode active material layer 54 is not specifically limited, and is 10 µm or more and 300 µm or less, and desirably 20 µm or more and 200 µm or less.

As the negative electrode current collector 62 constituting the negative electrode sheet 60, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 62 is desirably copper foil.

Dimensions of the negative electrode current collector 62 are not specifically limited, and may be appropriately determined depending on battery design. In the case of using copper foil as the negative electrode current collector 62, the thickness thereof is not specifically limited, and is, for example, 5 µm or more and 35 µm or less, and desirably 7 µm or more and 20 µm or less.

The negative electrode active material layer 64 includes a negative electrode active material. Examples of the negative electrode active material include carbon materials such as graphite, hard carbon, and soft carbon. Graphite may be natural graphite or artificial graphite, and may be amorphous carbon-coated graphite in which graphite is coated with an amorphous carbon material.

The average particle size (median particle size: D50) of the negative electrode active material is not specifically limited, and is, for example, 0.1 µm or more and 50 µm or less, desirably 1 µm or more and 25 µm or less, and more desirably 5 µm or more and 20 µm or less. The average particle size (D50) of the negative electrode active material can be determined by, for example, a laser diffraction and scattering method.

The negative electrode active material layer 64 can include components other than the active material, such as a binder or a thickener. Examples of the binder include styrene-butadiene rubber (SBR) and polyvinylidene fluoride (PVDF). Examples of the thickener include carboxymethyl cellulose (CMC).

The content of the negative electrode active material in the negative electrode active material layer 64 is desirably 90 mass% or more, and more desirably 95 mass% or more and 99 mass% or less. The content of the binder in the negative electrode active material layer 64 is desirably 0.1 mass% or more and 8 mass% or less, and more desirably 0.5 mass% or more and 3 mass% or less. The content of the thickener in the negative electrode active material layer 64 is desirably 0.3 mass% or more and 3 mass% or less, and more desirably 0.5 mass% or more and 2 mass% or less.

The thickness of the negative electrode active material layer 64 is not specifically limited, and is, for example, 10 µm or more and 300 µm or less, and desirably 20 µm or more and 200 µm or less.

The separator 70 is the separator described above, that is, a separator provided with the adhesive layer 76 containing a predetermined amount of the second inorganic particles and formed on at least one principal surface of the laminate of the base material layer 72 and the ceramic layer 74 to have an oblique stripe pattern at a predetermined angle.

A nonaqueous electrolyte 80 typically includes a nonaqueous solvent and a supporting salt (electrolyte salt). As the nonaqueous solvent, various organic solvents such as carbonates, ethers, esters, nitriles, sulfones, and lactones for use in an electrolyte of a typical lithium ion secondary battery can be used without any particular limitation. Specific examples of such a nonaqueous solvent include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such nonaqueous solvents may be used alone or two or more of them may be used in an appropriate combination.

Desired examples of the supporting salt include lithium salts (desirably LiPF₆) such as LiPF₆, LiBF₄, and lithium bis(fluorosulfonyl)imide (LiFSI). The concentration of the supporting salt is desirably 0.7 mol/L or more and 1.3 mol/L or less.

The nonaqueous electrolyte 80 may include components not described above, for example, various additives exemplified by: a film forming agent such as an oxalato complex; a gas generating agent such as biphenyl (BP) or cyclohexylbenzene (CHB); and a thickener, to the extent that the effects of the present disclosure are not significantly impaired.

FIG. 4 does not strictly illustrate the amount of the nonaqueous electrolyte 80 injected into the battery case 30.

The lithium ion secondary battery 100 as described above has high impregnating ability of the nonaqueous electrolyte to the electrode body (especially the separator) in manufacturing, and thus, has high production efficiency. In the lithium ion secondary battery 100, the separator 70 and the electrode are bonded together with sufficient strength, and thus, a misalignment in stacking is less likely to occur in fabrication of the electrode body 20. In this regard, high production efficiency is also obtained. In addition, the lithium ion secondary battery 100 has low initial resistance, and suppresses resistance increase in repetitive charging and discharging. Furthermore, in the lithium ion secondary battery 100, since the interplate distance is highly uniform, high resistance to precipitation of metallic lithium can be obtained.

The lithium ion secondary battery 100 is applicable to various applications. Specific examples of application of the lithium ion secondary battery 100 include: portable power supplies for personal computers, portable electronic devices, and portable terminals; vehicle driving power supplies for electric vehicles (BEVs), hybrid electric vehicles (HEVs), and plug-in hybrid electric vehicles (PHEVs); and storage batteries for small power storage devices, and among these devices, vehicle driving power supplies are desirable. The lithium ion secondary battery 100 can be used in a battery pack in which a plurality of batteries are typically connected in series and/or in parallel.

The foregoing description is directed to the square lithium ion secondary battery 100 including the flat wound electrode body 20 as an example. Alternatively, the nonaqueous electrolyte secondary battery disclosed here can also be configured as a lithium ion secondary battery including a stacked-type electrode body (i.e., electrode body in which a plurality of positive electrodes and a plurality of negative electrodes are alternately stacked). The stacked-type electrode body may include a plurality of separators each interposed between one positive electrode and one negative electrode or may include one separator in such a manner that positive electrodes and negative electrodes are alternately stacked with one separator being repeatedly folded.

The nonaqueous electrolyte secondary battery disclosed here may be configured as a coin type lithium ion secondary battery, a button type lithium ion secondary battery, a cylindrical lithium ion secondary battery, or a laminated case type lithium ion secondary battery. The nonaqueous electrolyte secondary battery disclosed here may be configured as a nonaqueous electrolyte secondary battery other than a lithium ion secondary battery, by a known method.

Test examples of the present disclosure will now be described, but are not intended to limit the present disclosure to these test examples.

### <Fabrication of Separators According to Examples and Comparative Examples>

An elongated porous polyethylene (PE) film fabricated by a wet process was prepared as a base material. The PE film had a thickness of 12 µm and a porosity of 45%.

A slurry containing alumina particles having an average particle size (D50) of 0.9 µm and a binder were prepared. This slurry was applied to both surfaces of the base material and dried, thereby obtaining a laminate in which a ceramic layer was formed on the base material. At this time, the proportion of alumina particles in the total solid content of the slurry was 90 mass% or more. The thickness of the resulting ceramic layer was 1.5 µm per one side.

A coating solution containing polyvinylidene fluoride (PVDF), alumina particles having an average particle size (D50) of 0.9 µm, and N-methyl-2-pyrrolidone (NMP) was prepared. At this time, the proportion of alumina particles in the total solid content of the coating solution is set at the proportion shown in Table 1 (it should be noted that in the case of 0 mass% of inorganic particles, the coating solution contains only PVDF and NMP). In Test Examples 1 through 6, the coating solution was applied onto both surfaces of the laminate to form a stripe pattern. At this time, the coated area with the pattern in each test example was 80%, and the width of the stripe (i.e., the width of each portion of the adhesive layer) was 4 mm. A stripe angle (°) (i.e., an angle formed by the adhesive layer with respect to the long side of the principal surface of separator) in each test example was set at the angle shown in Table 1.

On the other hand, in Test Examples 7 and 8, the coating solution was applied onto both of the entire surfaces of the laminate. The applied coating solution was dried to thereby form an adhesive layer.

In the test examples, the surface coverage of the adhesive layer (i.e., proportion of the area of the adhesive layer formed portion to the area of the principal surface of the separator) was equal to a proportion of the coated area with the coating solution. In each test example, the thickness of the resulting adhesive layer was 1.0 µm per one side. In this manner, separators of the test examples were obtained.

### <Production of Lithium Ion Secondary Battery for Evaluation>

First, LiNi_{1/3}Co_{1/3}Mn_{1/3}O₂ (LNCM) as a positive electrode active material, acetylene black (AB) as a conductive agent, and polyvinylidene fluoride (PVdF) as a binder were mixed with N-methyl pyrrolidone (NMP) at a mass ratio of LNCM : AB : PVdF = 87 : 10 : 3, thereby preparing slurry for forming a positive electrode active material layer. This slurry was applied to aluminium foil and dried to form a positive electrode active material layer. The resulting sheet was pressed and cut into a shape with a width of 50 mm and a length of 230 mm, thereby obtaining a positive electrode sheet. A positive electrode active material layer non-formed portion was provided in an end portion of the positive electrode sheet in the longitudinal directions.

Then, graphite (C) as a negative electrode active material, styrene-butadiene rubber (SBR) as a binder, and carboxymethyl cellulose (CMC) as a thickener were mixed with ion-exchanged water at a mass ratio of C : SBR : CMC = 98 : 1 : 1, thereby preparing slurry for forming a negative electrode active material layer. This slurry was applied to copper foil and dried, thereby forming a negative electrode active material layer. The resulting sheet was pressed and cut into a shape with a width of 52 mm and a length of 330 mm, thereby obtaining a negative electrode sheet. A negative electrode active material layer non-formed portion was provided in an end portion of the negative electrode sheet in the longitudinal directions.

An aluminium lead was attached to the positive electrode active material layer non-formed portion of the positive electrode sheet by ultrasonic welding to project in the width direction of the positive electrode sheet. A nickel lead was attached to the negative electrode active material layer non-formed portion of the negative electrode sheet by ultrasonic welding to project in the width direction of the negative electrode sheet. The separators of the test examples were each cut into a shape with a width of 54 mm and a length of 400 mm. The stripe angle of each separator was the same before and after the cut.

The positive electrode sheet, the negative electrode sheet, and two separators in each of the test examples were stacked. The resulting laminate was wound and the wound body was pressed under a predetermined pressure, thereby obtaining a flat wound electrode body. At this time, the lead of the positive electrode sheet and the lead of the negative electrode sheet were configured to project from the wound electrode body in the same direction. The wound electrode body had an outer size of 41 mm × 54 mm.

An exterior body constituted by an aluminium laminate sheet was prepared. The resulting wound electrode body was housed in the exterior body constituted by the aluminium laminate sheet, a nonaqueous electrolyte was injected into the exterior body, and then, the exterior body was hermetically sealed. The nonaqueous electrolyte was obtained by dissolving LiPF₆ at a concentration of 1.1 mol/L in a mixed solvent containing ethylene carbonate (EC), dimethyl carbonate (DMC), and ethyl methyl carbonate (EMC) at a volume ratio of 3 : 4 : 3. In this manner, lithium ion secondary batteries for evaluation according to the test examples were obtained.

### <Characteristic Evaluation>

### [Degassing Property Evaluation]

A separator of each test example was produced to have a width of 3000 mm, and was wound by a winder around a core material of 8 inches under a tension of 150 gf. Here, if a gas (i.e., air) is not released in winding the separator, the gas remains as bubbles between separator layers so that unevenness occurs on the separator layers. Appearance of the wound separator was visually observed to examine whether unevenness is caused by remaining bubbles or not. Table 1 shows results.

### [Electrification Evaluation]

The separator of each test example was placed on a metal plate, and a 63-mm square weight with a load of 1.98 N was placed on the metal plate. An end of the separator was pulled horizontally at a speed of 1 mm/sec. with a tensile test machine including a load cell, and an average friction force at a travel distance of 50 mm from when the separator had started moving at a constant speed was measured. The obtained average friction force was divided by 1.98 N to calculate a coefficient of dynamic friction. Table 1 shows results. The coefficient of dynamic friction increases as electrification of the adhesive layer of the separator increases.

### <Characteristic Evaluation>

### [Impregnation Time of Nonaqueous Electrolyte]

Each lithium ion secondary battery for evaluation in which a nonaqueous electrolyte was injected was stored under an atmosphere at 25°C. After each lapse of one hour, each lithium ion secondary battery for evaluation was disassembled to obtain an area where a portion of a separator did not impregnated with the nonaqueous electrolyte. From a relationship between time and the area, a time when impregnation of the nonaqueous electrolyte in the separator was completed was determined. Table 1 shows the results.

### [Separator Adhesiveness Measurement]

The separator of each of the test examples was sandwiched between the positive electrode and the negative electrode produced as described above. The resulting structure was sandwiched between porous polyethylene films, and then further sandwiched between Teflon (registered trademark) sheets. The resulting laminate was pressed under a pressure of 60 kN at 25°C for 10 seconds. The resulting pressed body was cut into a strip of 20 mm × 120 mm, thereby producing a measurement sample. At this time, in the separator on which an adhesive layer was formed in a stripe pattern, the longitudinal direction of the measurement sample were parallel to the stripe direction (i.e., the extension direction of the adhesive layer).

The measurement sample was fixed onto a horizontal movable table of a tensile test machine with a double face tape. Only the separator of the measurement sample was pulled upward by 90° (i.e., vertically) by a push-pull gauge at a speed of 200 mm/min. At this time, the movable table was moved in synchronization with the amount of movement of the push-pull gauge. A load when the separator and the electrode were separated was measured, and defined as an adhesiveness of the separator. Table 1 shows results.

### [Battery Resistance]

Each lithium ion secondary battery for evaluation was placed under an atmosphere at 25°C, and charged to an SOC 50%. This lithium ion secondary battery for evaluation was discharged for 10 seconds with a current value in the range from 0.2 C to 4.0 C. A voltage value after 10-second discharge with respect to each current value was plotted, and then, from the tilt of a straight line obtained by linear approximation, an IV resistance was obtained. Table 1 shows results.

### [Table 1]

**Table 1**

| | Adhesive Layer | | | | Characteristic Evaluation | | | | |
|---|---|---|---|---|---|---|---|---|---|
| | Pattern | Stripe Angle (°) | Surface Coverage (%) | Inorganic Particles (mass%) | Degassing Property /Remainin g Bubbles | Electrification /Dynamic Friction Coefficient | Impregnation Completion Time (hours) | Adhesive -ness (N/m) | Resistance (mΩ) |
| Test Example 1 | Oblique Stripe | 20 | 80 | 0 | Present | 0.69 | 3.5 | 0.97 | 76 |
| Test Example 2 | Oblique Stripe | 45 | 80 | 0 | Present | 0.70 | 2.0 | 1.07 | 77 |
| Test Example 3 | Oblique Stripe | 45 | 80 | 10 | None | 0.50 | 1.8 | 1.06 | 74 |
| Test Example 4 | Oblique Stripe | 45 | 80 | 60 | None | 0.47 | 1.5 | 1.02 | 73 |
| Test Example 5 | Oblique Stripe | 45 | 80 | 75 | None | 0.47 | 1.4 | <0.5 | 74 |
| Test Example 6 | Oblique Stripe | 70 | 80 | 0 | Present | 0.70 | 3.3 | 1.02 | 77 |
| Test Example 7 | Overall Coating | - | 100 | 0 | Present | 0.85 | 15.0 | 1.40 | 85 |
| Test Example 8 | Overall Coating | - | 100 | 60 | None | 0.60 | 14.0 | 1.30 | 84 |

In Test Examples 1 through 6, the adhesive layer was provided in a stripe pattern with a stripe angle of 20° to 70° on a principal surface of the separator. On the other hand, in Test Examples 7 and 8, the adhesive layer is provided on the entire principal surface of the separator. A comparison of these test examples reveals that the adhesive layer provided in the stripe pattern with a stripe angle of 20° to 70° on the principal surface of the separator can enhance impregnating ability of the nonaqueous electrolyte into the separator and can reduce battery resistance.

A comparison between Test Example 2 and Test Examples 3 to 5 and a comparison between Test Example 7 and Test Example 8 reveal that the inorganic particles contained in the adhesive layer allow degassing property of the separator to be enhanced and allow the separator to be less likely to be electrically charged. A comparison between Test Example 4 and Test Example 8 reveals that the adhesive layer formed in a stripe pattern allows the separator to be especially less likely to be electrified. On the other hand, a result of Test Example 5 shows that an excessively large content of inorganic particles in the adhesive layer prevents sufficient adhesion as the adhesive layer.

From the foregoing results, it can be understood that in the case where the adhesive layer contains 3 mass% or more and 65 mass% or less of inorganic particles and the angle formed by the adhesive layer and the long side of the principal surface of the separator is 20° or more and 70° or less, high antistatic property, high degassing property in winding, and high impregnating ability of the nonaqueous electrolyte after forming the electrode body can be obtained. Thus, it can be understood that the separator disclosed here shows high antistatic property, high degassing property in winding, and high impregnating ability of the nonaqueous electrolyte after forming the electrode body.

Specific examples of the present disclosure have been described in detail hereinbefore, but are merely illustrative examples, and are not intended to limit the scope of claims. The techniques described in claims include various modifications and changes of the above exemplified specific examples.

## Claims

1. A separator (70) comprising:
a base material layer (72) of a porous resin; and
a ceramic layer (74) containing 85 mass% or more of first inorganic particles and disposed on at least one surface of the base material layer (72), wherein
principal surfaces of the separator (70) have long sides,
the separator (70) further comprises an adhesive layer (76) having portions arranged at a predetermined pitch to form a stripe pattern on at least one of the principal surfaces,
the adhesive layer (76) includes an adhesive resin and second inorganic particles,
a content of the second inorganic particles in the adhesive layer (76) is 3 mass% or more and 65 mass% or less, and
an angle formed by the adhesive layer (76) and the long side of the at least one principal surface of the separator (70) is 20° or more and 70° or less.

2. The separator (70) according to claim 1, wherein the angle formed by the adhesive layer (76) and the long side of the at least one principal surface of the separator (70) is 45° or more and 60° or less.

3. The separator (70) according to claim 1 or 2, wherein the adhesive resin is polyvinylidene fluoride.

4. The separator (70) according to any one of claims 1 to 3, wherein the second inorganic particles contained in the adhesive layer (76) are particles of alumina, boehmite, magnesia, or barium sulfate.

5. The separator (70) according to any one of claims 1 to 4, wherein the adhesive layer (76) has a width of 0.5 mm or more and 4 mm or less, and
a coverage of the at least one principal surface of the separator (70) with the adhesive layer (76) is 50% or more and 90% or less.

6. A nonaqueous electrolyte secondary battery (100) comprising:
an electrode body (20) including a positive electrode (50), a negative electrode (60), and a separator (70) insulating the positive electrode (50) and the negative electrode (60) from each other; and
a nonaqueous electrolyte (80), wherein
the separator (70) is the separator (70) according to any one of claims 1 to 5.
